(19) Europäisches Patentamt

European Patent Office

Office européen des brevets

(11) **EP 1 089 554 A1**

(12) **EUROPEAN PATENT APPLICATION**
published in accordance with Art. 158(3) EPC

(43) Date of publication:
04.04.2001 Bulletin 2001/14

(51) Int. Cl.⁷: **H04N 1/60**, B41J 2/525

(21) Application number: 00911401.8

(86) International application number:
PCT/JP00/01887

(22) Date of filing: 28.03.2000

(87) International publication number:
WO 00/60848 (12.10.2000 Gazette 2000/41)

(84) Designated Contracting States:
AT BE CH CY DE DK ES FI FR GB GR IE IT LI LU MC NL PT SE

(30) Priority: 30.03.1999 JP 8876199
03.06.1999 JP 15614399

(71) Applicant:
MATSUSHITA ELECTRIC INDUSTRIAL CO., LTD.
Kadoma-shi, Osaka-fu 571-8501 (JP)

(72) Inventors:
• HIMOTO, Etsuko
  Fukuoka-shi, Fukuoka 815-0033 (JP)
• HIRATSUKA, Seiichiro
  Kitakyusyu-shi, Fukuoka 803-0814 (JP)

(74) Representative:
Grünecker, Kinkeldey,
Stockmair & Schwanhäusser
Anwaltssozietät
Maximilianstrasse 58
80538 München (DE)

(54) **COLOR CORRECTING METHOD OF IMAGE OUTPUTTING DEVICE**

(57) A color correcting method of an image-outputting device for outputting an image by combining a plurality of different types of coloring materials, comprising a first glossiness acquiring step of acquiring the glossiness of a monochromatic output of each coloring material, a second glossiness acquiring step of acquiring the glossiness of a mixed color output of a combination of two or more combined coloring materials, a first relation acquiring step of determining a relation between the amount of the coloring material used in the monochromatic output and the glossiness, a second relation acquiring step of determining a relation between the total amount of the coloring materials used in the mixed color output and the glossiness, a third relation acquiring step of determining a relation between the mixing ratio of the coloring materials used in the mixed color output and the glossiness, and a coloring material determining step of determining the combination of the coloring material depending on the glossiness change on the basis of the relations acquired at the first to third relation acquiring steps.

Fig.10

Printed by Xerox (UK) Business Services
2.16.7 (HRS)/3.6

## Description

### Technical Field

The present invention relates to a color correcting method of image-outputting device that control an influence of glossiness of a manuscript paper as well as an influence of glossiness due to difference of coloring materials, in the color image-outputting device.

### Background Art

Image-outputting devices that produce color images have been used in recent years. An image-outputting device of the prior art for producing color images will be described hereinafter.

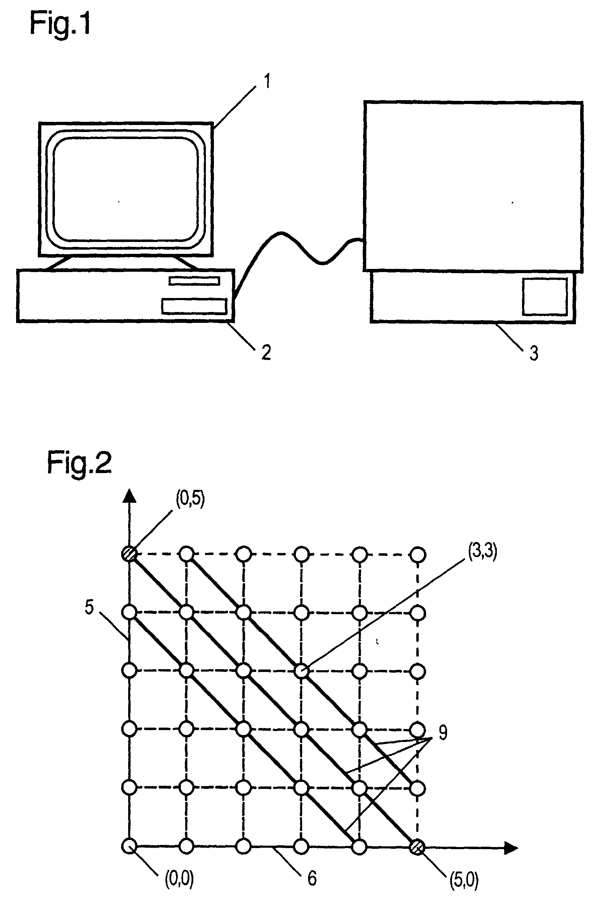

Fig. 1 is an architectural drawing showing an image-outputting device.

The image-outputting device comprises:

a color display 1 for displaying a color image;
a computer 2 for receiving a command, and transferring a data signal of a color image to be printed; and
a color printer 3 for receiving the data signal of the color image, and producing a print.

Color images are thus printed according to the above architecture.

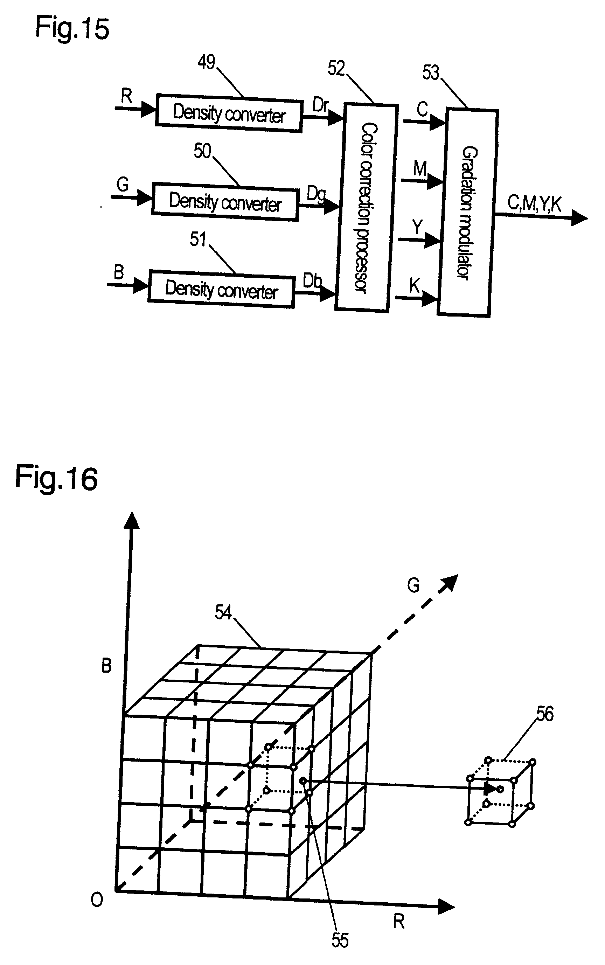

Fig. 15 is a block diagram depicting a color-correction processor unit of the prior art, in which a color-correction process is performed on a color image data signal.

The color-correction processor unit shown in Fig. 15 comprises:

density converter circuits 49, 50, and 51 for converting an RGB image data (Red Green Blue image data) into density data Dr, Dg, and Db;
a color-correction processor circuit 52 for converting the RGB density data Dr, Dg, and Db into data for cyan (hereinafter referred to simply as "C"), magenta (hereinafter referred to simply as "M"), yellow (hereinafter referred to simply as "Y"), and black (hereinafter referred to simply as "K") used for color reproduction by the printer; and
a gradation modulator circuit 53 for modulating gradation.

The color correction processor unit of the foregoing structure is built into the computer 2 or the color printer 3 of Fig. 1.

A color-correction process in the color-correction processor unit of Fig. 15 is carried out by the three-dimensional reference table interpolation technique. The three-dimensional reference table interpolation technique is detailed in "New Volume of Color Science Handbook, Second Edition" (edited by the Color Science Association of Japan), page 1144, "4.4 Color Conversion by Table Interpolation".

Fig. 16 is an expository drawing of the color correction process performed by the three-dimensional reference table interpolation technique. Fig. 16 shows an RGB density space 54. A cube representing the RGB density space 54 shows coverage of an entire color space input from the computer 2. This input color space is divided further into smaller cubes, as shown in Fig. 16. CMYK signals to be output corresponding to input RGB density signals are obtained from values in a CMYK output reference table for eight vertexes (lattice points) of the cube and weights given by individual distances between the eight vertexes of the cube and a coordinate point. CMYK data corresponding to RGB density values for the individual vertexes of the cube are saved in the reference table.

A reference numeral 55 represents an input RGB density signal for a color image.

A cube 56 divided within the RGB space 54 contains a coordinate point 55 of the input RGB density signals. Weights are obtained respectively from distances of the vertexes of the cube 56 and the coordinate point 55 of the input signals. CMYK signals to be output corresponding to the obtained input RGB density signals are derived from the reference table described above. The color printer 3 prints out according to the obtained CMYK signals.

Here, the reference table used in the conventional color correction process has been prepared by obtaining CMYK values that most accurately reproduce colors of density signals dri, dgi, and dbi at the respective lattice points. In addition, for characters in black color, for which glossless finish is rather preferred, the reference table has been prepared so that it produces an output of only K toner having less glossiness as compared to toner of other colors. In this method, glossiness of individual toners of C, M, Y, and K have not been taken into consideration.

It has always been desired so far that color images in manuscript documents are reproduced accurately when black characters are printed with a four-color printer. As a part of it, reproduction of glossless images has been desired.

For this reason, K toner has been made to be such material that is capable of reproducing images glosslessly as compared with others, i.e. C toner, M toner, and Y toner.

Hence, when black is printed, that is

$$(R, G, B) = (0, 0, 0),$$

then, CMYK densities are output as

$$(C, M, Y, K) = (0, 0, 0, 255),$$

where: 255 is the maximum density.

Accordingly, characters are printed without glossiness because the K toner is of glossless material.

In the conventional reference table, output of black color is made only for the glossless K toner. However, there is a problem that a steep increase appears in glossiness for other colors around the black in the color space due to an increase in amount of the C, M and Y toners in the proportion of UCR ratio. If a natural image is printed, a difference of glossiness becomes obvious upon comparison between a single color portion of the K toner and a mixed color portion of the other C toner, M toner, and Y toner. Therefore, fine looking images had not been obtainable.

As described, there has been a problem that good quality images are not obtainable by the method of color correction with the image-outputting device of the prior art, since the difference of glossiness appears due to the toner of various colors, when natural images are reproduced.

## Disclosure of Invention

The present invention is intended to provide a method of color correction for image-outputting devices that can reduce difference of glossiness in image reproduction, and produce an excellent printing result.

To achieve the above object, the method of color correction for an image-outputting device of this invention comprises:

a) a first glossiness obtaining step for obtaining glossiness of a mono-color output produced individually with each of coloring materials;

b) a second glossiness obtaining step for obtaining glossiness of a mixed-color output produced by combining two or more of the coloring materials;

c) a first relation obtaining step for obtaining a relation between amount of the coloring material used for the mono-color output and the glossiness;

d) a second relation obtaining step for obtaining a relation between total amount of the coloring materials used for the mixed-color output and the glossiness;

e) a third relation obtaining step for obtaining a relation between a mixing ratio of the coloring materials used for the mixed-color output and the glossiness; and

f) a coloring material combination determining step for determining a combination of the coloring materials with respect of a variation in glossiness based on the relations obtained in the first through the third relation obtaining steps.

Accordingly, there can be obtained with the above steps the method of color correction for image-outputting devices capable of producing an excellent printing result by reducing difference of glossiness in reproduction of images.

Furthermore, the present invention is intended to control a total amount of coloring materials in a manner that comprises the steps of:

obtaining an amount of each of the coloring materials that compose a color image;

obtaining the total amount of the coloring materials from the individual amount of the coloring materials;

comparing the total amount of the coloring materials with a threshold of reference table value;

adjusting the total amount of the coloring materials into a match with the threshold and adopting it as a reference table value, if the threshold of the reference table value is smaller than the total amount of the coloring materials; and

adopting the total amount of the coloring materials, as it is, as a reference table value, if the threshold is greater than the total amount of the coloring materials.

It thus becomes possible to reduce the difference in glossiness of output images, since total amount of the coloring materials to be output can be adjusted with the foregoing steps.

**Brief Description of the Drawings**

Fig. 1 is an architectural drawing showing an image-outputting device;

Fig. 2 is a coordinate diagram of toner amount that shows amounts of individual toners when making a change from K to C;

Fig. 3 is a color patch diagram showing color patches for examination of glossiness corresponding to the coordinates of toner amount shown in Fig. 2;

Fig. 4 is a three-dimensional coordinate diagram of toner amount that shows amount of individual toners when making a change from K to B;

Fig. 5 is a two-dimensional coordinate diagram of toner amount drawn with the amount of K toner and a line segment shown in Fig. 4 as axes of the coordinates;

Fig. 6 is a color patch diagram showing color patches for examination of glossiness corresponding to the coordinates of toner amount shown in Fig. 5;

Fig. 7 is a schematic illustration depicting the measurement principle of glossiness;

Fig. 8 is a relational chart showing a relation of glossiness as measured on an isometric line of total amount of toner with respect to mixing ratio of K toner when making a change from K to B;

Fig. 9 is a relational chart showing a relation of glossiness as measured when a mixing ratio of the K toner is one-half of a total amount of the toner with respect to the total amount of the toner in the case of making a change from K to B;

Fig. 10 is a coordinate diagram of toner amount showing a combination of toners that can reproduce smoothly a variation of glossiness from K to B;

Fig. 11 is a block diagram showing a color-correction processor unit of a third exemplary embodiment of this invention;

Fig. 12 is a conceptual diagram showing concept of an removal process of under color;

Fig. 13 is a relational chart showing a relation of UCR ratio with respect to the lowest density;

Fig. 14 is a flow chart showing a process of operation according to a method of color-correction of a fourth exemplary embodiment;

Fig. 15 is a block diagram depicting a color-correction processor unit of the prior art in that a color-correction process is performed on a color image data signal; and

Fig. 16 is an expository drawing of the color correction process performed by the three-dimensional reference table interpolation technique.

**Description of the Preferred Embodiments**

Exemplary embodiments of the present invention will be described hereinafter with reference to accompanying figures.

**(First Exemplary Embodiment)**

Fig. 1 is an architectural drawing showing an image-outputting device.

The image-outputting device of this invention comprises:

a color display 1 for displaying a color image;

a computer 2 for receiving a command, and transferring a data signal of a color image to be printed; and

a color printer 3 for receiving the data signal of the color image, and producing a print.

This architecture is identical to an image-outputting device of the prior art. Color images are thus printed according to the above architecture.

A method of examining glossiness will be described hereinafter, using an example, in which a change is made from K (black) to C (cyan).

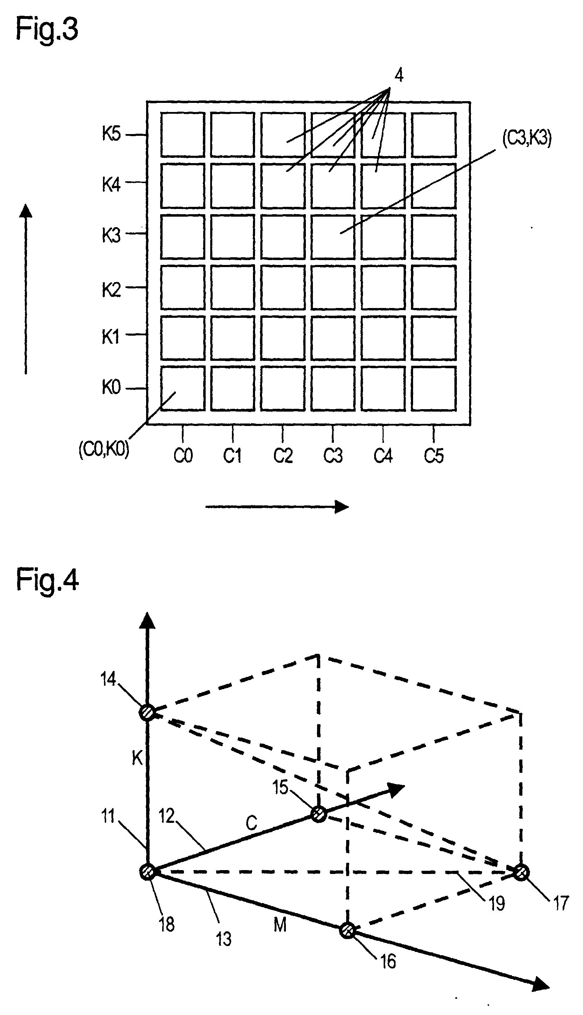

Fig. 2 is a coordinate diagram of toner amount that shows amounts of individual toners when making the change from K to C. In Fig. 2, an axis of ordinates 5 shows amount of the K toner, and an axis of abscissae 6 shows amount of the C toner. Directions of arrows in both axes indicate increase in amount of the toners. A point (0, 5) represents a coordinate point where amount of the K toner is its maximum and the C toner is zero, and a point (5, 0) represents another coordinate point where amount of the C toner is its maximum and the K toner is zero. Line segments 9 represent lines of total amount of toner, each indicating combinations, of which total amounts of toner are equal. Glossiness at each point of the coordinates of toner amount is obtained by printing a color patch shown in Fig. 3, and by measuring a glossiness of the color patch. Color of each square area differs from one another in Fig. 3. Each of color patches 4 is printed after determination of amounts of the K and C toners and the mixing ratio, in this instance. Color patches, with which the change from K to C can be studied, are composed as color patches of this exemplary embodiment, because glossiness of the K toner is low.

In Fig. 3, a vertical direction shows amount of the K toner, and a horizontal direction shows amount of the C toner. The directions of arrows indicate increase in amount of the toners in both directions. Fig. 3 is drawn in a corresponding manner with Fig. 2. Circular symbols marked in Fig. 2 are printed in the color patches of their corresponding positions in Fig. 3. Those circular symbols shown along the axis of abscissae 6 in Fig. 2, for instance, correspond with a K0 line in Fig. 3, and the circular symbols shown along the axis of ordinates 5 in Fig. 2 correspond with a C0 row in Fig. 3. Furthermore, a color patch (C3, K3) in Fig. 3 is printed to reflect a point (3, 3) in Fig. 2.

Fig. 4 is a three-dimensional coordinate diagram of toner amount that shows amount of individual loners when making a change from K to B. In Fig. 4, an axis of ordinates 11 represents amount of the K toner, an axis 12 represents amount of the C toner, and an axis 13 represents amount of M toner. A direction of arrow in every axis indicates increase in amount of the toner. A point 14 represents a coordinate point where amount of the K toner is its maximum value, a point 15 a coordinate point where amount of the C toner is its maximum value, and a point 16 a coordinate point where amount of the M toner is its maximum value. A point 17 represents a coordinate point where amounts of both the C toner and the M toner take their maximum values, that is to reproduce color of B. A point 18 represents an origin of the coordinates where amount of all toners is zero. A line segment 19 is a segment connecting the point 18 (origin of the coordinates) and the point 17 for the B.

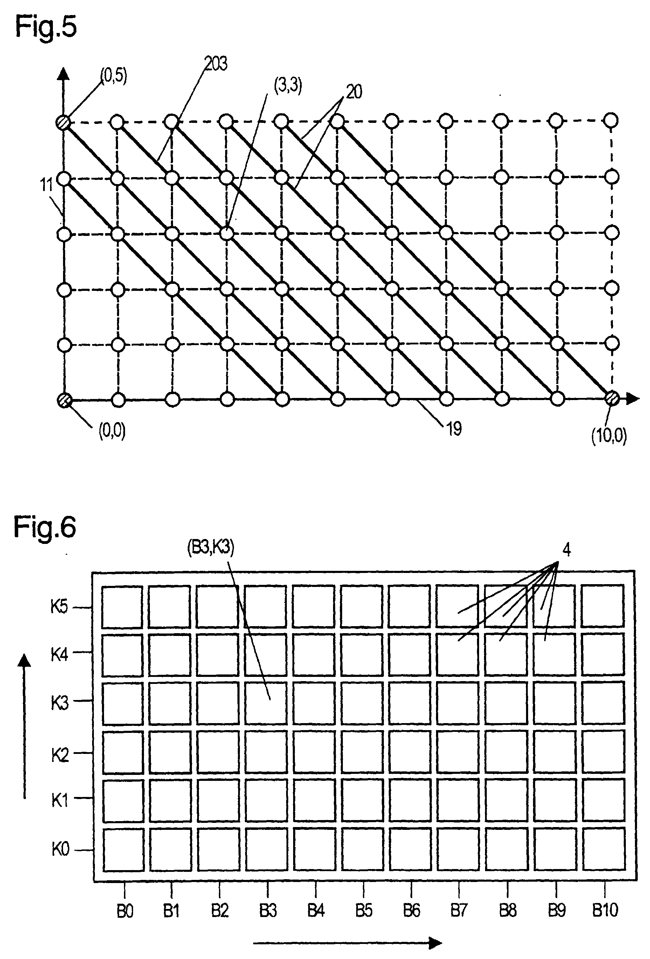

Fig. 5 is a two-dimensional coordinate diagram of toner amount drawn with the axis 11 for amount of the K toner and the line segment 19 shown in Fig. 4 as axes of the coordinates, which shows amounts of individual toners when making a change from K to B. In the like manner as in the case of Fig. 2, line segments 20, for instance, represent lines of total amount of toner, each indicating combinations, of which total amounts of toner are equal. Points shown by circular symbols are coordinate points representing combinations of individual toners to be printed in color patches.

A vertical direction in Fig. 6 shows amount of the K toner, and a horizontal direction corresponds to the line segment 19 shown in Fig. 4. The directions of arrows indicate increase in amount of the toner in both directions. Fig. 6 is drawn in a corresponding manner with Fig. 5. The circular symbols marked in Fig. 5 are printed in the color patches of their corresponding positions in Fig. 6. Those circular symbols shown along the axis of abscissae 19 in Fig. 5, for instance, correspond with a K0 line in Fig. 6, and the circular symbols shown along the axis of ordinates 11 in Fig. 5 correspond with a C0 row in Fig. 6. Furthermore, a color patch (B3, K3) in Fig. 6 is printed to reflect a point (3, 3) in Fig. 5.

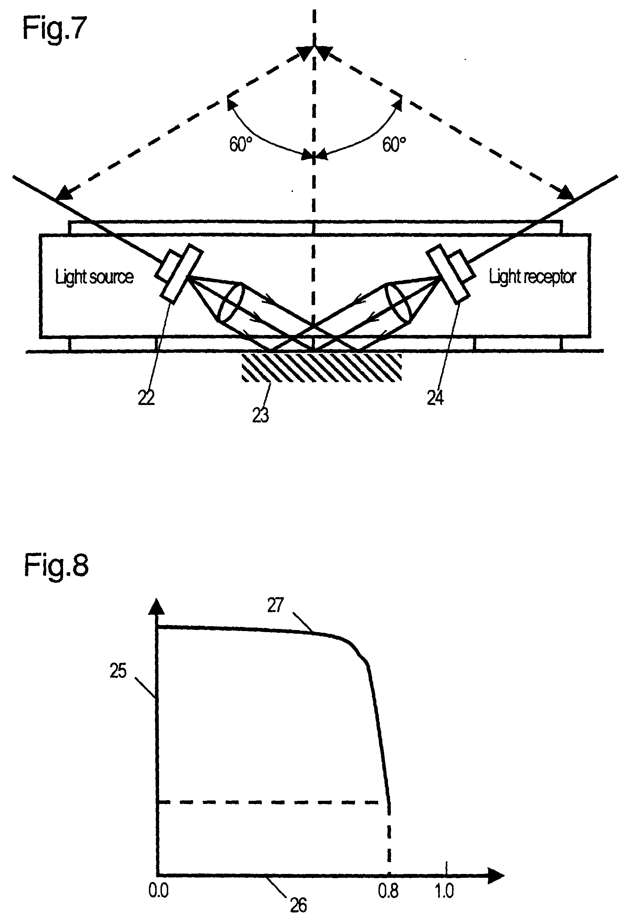

Individual color patches shown in Fig. 3 or Fig. 6 composed in the above-described manner are measured of their glossiness with a method shown in Fig. 7.

Fig. 7 is a schematic illustration depicting the measurement principle of glossiness. In Fig. 7, light from a light source 22 is irradiated toward a measuring plane 23. The light is reflected within this area. An intensity of the light reflected off the measuring plane 23 is detected by a light receptor 24. Glossiness can be obtained from a ratio of the intensity of reflected light measured by the light receptor 24 with an intensity of reflected light from a glossiness reference plate, according to this measurement principle.

(A first glossiness obtaining step and a first relation obtaining step)

Using the method shown in Fig. 7, glossiness is measured.

The color patches along the C0 row are measured, in the case of those color patches shown in Fig. 3. In addition, the color patches along the K0 line are measured. The foregoing steps can obtain a relation between amount and glossiness of a coloring material of a single color.

In the case of the color patches shown in Fig. 6, the color patches along the B0 row are measured. Furthermore, the color patches along the K0 line are also measured. The foregoing steps give glossiness of a mono-color output produced with a single color for individual coloring materials. They can also give a relation between amount and glossiness of the coloring material of mono-color.

(A second glossiness obtaining step and a second relation obtaining step)

The color patches other than the C0 row and the K0 line are measured in the case of the color patches shown in Fig. 3. This can give a relation between total amount of the coloring materials used for the mixed-color output and glossiness.

The color patches other than the B0 row and the K0 line are measured in the case of the color patches shown in Fig. 6. This can give glossiness of the mixed-color output produced with a combination of two or more colors of the coloring materials. It can also give a relation between total amount of the coloring materials used for the mixed-color output and glossiness.

Fig. 8 is a relational chart showing a relation of glossiness as measured on a line segment 203 among a plurality of lines of total amount of toner shown in Fig. 5 with respect to mixing ratio of the K toner, when making the change from K to B. In Fig. 8, an axis 25 represents magnitude of the glossiness, and an axis 26 represents mixing ratio in amount of the K toner to the total amount of toners. A characteristic curve 27 exhibits a change in measured glossiness. It is known that the glossiness decreases as the mixing ratio of the K toner increases.

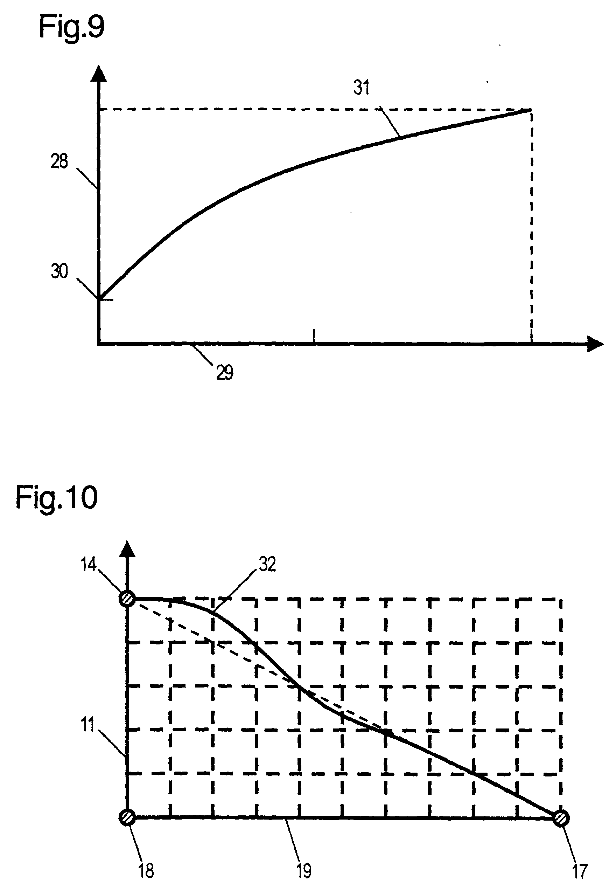

Fig. 9 is a relational chart showing a relation of glossiness as measured when a mixing ratio of the K toner is one-half of a total amount of the toners with respect to the total amount of the toners. Those of the color patches measured are (K0, B0), (K1, B1), (K2, B2), (K3, B3), (K4, B4), and (K4, B4) of Fig. 6. In Fig. 9, an axis 28 represents magnitude of glossiness, and an axis 29 represents total amount of the toners. A point 30 is a coordinate point representing glossiness of a sheet of paper. A characteristic curve 31 exhibits a change in glossiness with respect to total amount of the toners. As shown in Fig. 9, the glossiness increases as the total amount of toner increases.

(A third relation obtaining step)

A mixing ratio in amount of the K toner to total amount of the toners is determined, based upon the relation between glossiness and mixing ratio of the K toner to the total amount of toners shown in Fig. 8, and the relation between glossiness and the total amount of toners shown in Fig. 9, in order to smooth the variation in glossiness from K to C.

With regard to the mixing ratio, glossiness is measured after colors in vicinities of a dotted line between the point 14 and the point 17 shown in Fig. 5, for instance, are output with a printer. The mixing ratio, which makes the glossiness to vary smoothly, is then determined in relation to the glossiness in the vicinities. The result is shown in Fig. 10. That is, Fig. 10 is a coordinate chart of the toner amount, which shows combinations of toners that can reproduce variation in glossiness smoothly from K to B. In Fig. 10, a characteristic line 32 represents the combinations of toners, which can reproduce the variation in glossiness smoothly from K to B.

As described in relation to Fig. 5, the axis 11 represents amount of the K toner, and the point 14 indicates a coordinate point where amount of the K toner is of the maximum value. In addition, the point 17 represents a coordinate point, which is the case where amounts of both the C toner and the M toner take their maximum values, that is to reproduce the color of B. Furthermore, the point 18 represents an origin of the coordinates where amount of all the toners is zero. The line segment 19 is the segment connecting the origin point 18 of the coordinates and the coordinate point 17.

In the same manner as described above for Fig. 2, 3, 4, 5, 6, 8, 9, and 10, other variations from K to M, from K to Y, from K to red (R), from K to green (G) are also printed on the color patches, and glossiness of the produced color patches are measured. Then, mixing ratios of the K toner to the total amounts of the toners are determined so as to smooth variation in glossiness from K to M, Y, K, R, G and B.

(Coloring material combination determination step)

Lines representing combinations for the other cases from K to C, from K to M, from K to Y, from K to R, and from K to G are now obtained in a manner as described above, and a range of color reproduction by the color printer 3 is determined for each of the obtained lines of combination. Reference table values to be used for the method of reference table interpolation shown in Fig. 16 are obtained from these combinations of the range of color reproduction, and used for the process of color correction.

As has been described, the present exemplary embodiment is able to perform the color correction with consideration given on glossiness of the coloring materials, since it comprises:

　　a) the first glossiness obtaining step for obtaining glossiness of the mono-color output produced individually with each of the coloring materials;
　　b) the second glossiness obtaining step for obtaining glossiness of the mixed-color output produced by combining two or more of the coloring materials;
　　c) the first relation obtaining step for obtaining a relation between amount of the coloring material used for the mono-color output and the glossiness;
　　d) the second relation obtaining step for obtaining a relation between total amount of the coloring materials used for the mixed-color output and the glossiness;
　　e) the third relation obtaining step for obtaining a relation between a mixing ratio of the coloring materials used for the mixed-color output and the glossiness; and
　　f) the coloring material combination determining step for determining a combination of the coloring materials with respect of a variation in glossiness based on the relations obtained in the first through the third relation obtaining steps.

Accordingly, a color image output of excellent look can be obtained by taking an effect of glossiness of the coloring materials, and reducing a difference in glossiness of the reproduced images.

**(Second Exemplary Embodiment)**

A second exemplary embodiment of this invention is to estimate glossiness of mixed colors individually based on glossiness of each toner of single color used for printing C, M, Y, and K, as opposed to the first exemplary embodiment of the invention, which is to produce color patches and measure glossiness in respect of variations from K to C, K to M, K to Y, K to R, K to G, and K to B.

A method of color correction process in the second exemplary embodiment of this invention will be described hereinafter.

(A glossiness obtaining step)

Color patches 4 shown in Fig. 3 and 6 are printed only with single colors, using a color printer 3. Glossiness of toners of the single colors are measured with a glossimeter shown in Fig. 7.

(A glossiness estimation step)

With a measurement result, formulae (1) giving relations between amount and glossiness of the toners are obtained as:

$$\left.\begin{array}{l} Gc = gc\ (mc) \\ Gm = gm\ (mm) \\ Gy = gy\ (my) \\ Gk = gk\ (mk) \end{array}\right\} \text{------------------------------------------} (1)$$

where mc, mm, my and mk denote amounts of individual toners C, M, Y and K, and Gc, Gm, Gy and Gk denote respective glossiness of the C, M, Y and K.

Using the formulae (1), an overall glossiness Ga is obtained in the case where amounts of individual toners C, M, Y and K are mc, mm, my and mk, with the formula (2)

$$Ga = F\ (mc,\ mm,\ my,\ my) = G\ (Gc,\ Gm,\ Gy,\ Gk) \tag{2}$$

(First through third relation obtaining steps)

A combination of the C, M, Y and K, which gives a smooth variation of glossiness, is obtained from the result given above, in the same manner as the first exemplary embodiment of this invention.

(A coloring material combination determining step)

Ranges of color reproduction are determined for the color printer 3.
Reference table values to be used in the reference table interpolation technique shown in Fig. 16 are obtained from a combination of these ranges of color reproduction, and they are used for the process of color correction.
As described, the present exemplary embodiment makes it possible to obtain glossiness of mixed colors only by obtaining glossiness of mono-color toners, since it comprises:

    a) the glossiness obtaining step for obtaining glossiness of the mono-color output produced individually for each of the coloring materials;
    b) the glossiness estimation step for estimating glossiness by using the glossiness obtained for each of the coloring material, for the cases where two or more coloring materials are mixed;

c) the firs relation obtaining step for obtaining a relation between amount of the coloring material used for the mono-color output and the glossiness;

d) the second relation obtaining step for obtaining a relation between total amount of the coloring materials used for the mixed-color output and the glossiness;

e) the third relation obtaining step for obtaining a relation between a mixing ratio of the coloring materials used for the mixed-color output and the glossiness; and

f) the coloring material combination determining step for determining combination of the coloring materials with respect to variation of glossiness based on the relations obtained in the first through the third relation obtaining steps.

Accordingly, there can be obtained readily the relations between glossiness and the toners.

**(Third Exemplary Embodiment)**

A third exemplary embodiment of this invention is to make color correction by determining a rate of removing under color used in a four-color printer, based on results obtained for total amount of toners, and relation between mixing ratio and glossiness of each of the C, M, Y and K toners in the first exemplary embodiment and the second exemplary embodiment of this invention. In other words, up to a coloring material combination determining step from a glossiness obtaining step are identical to those of the second exemplary embodiment.

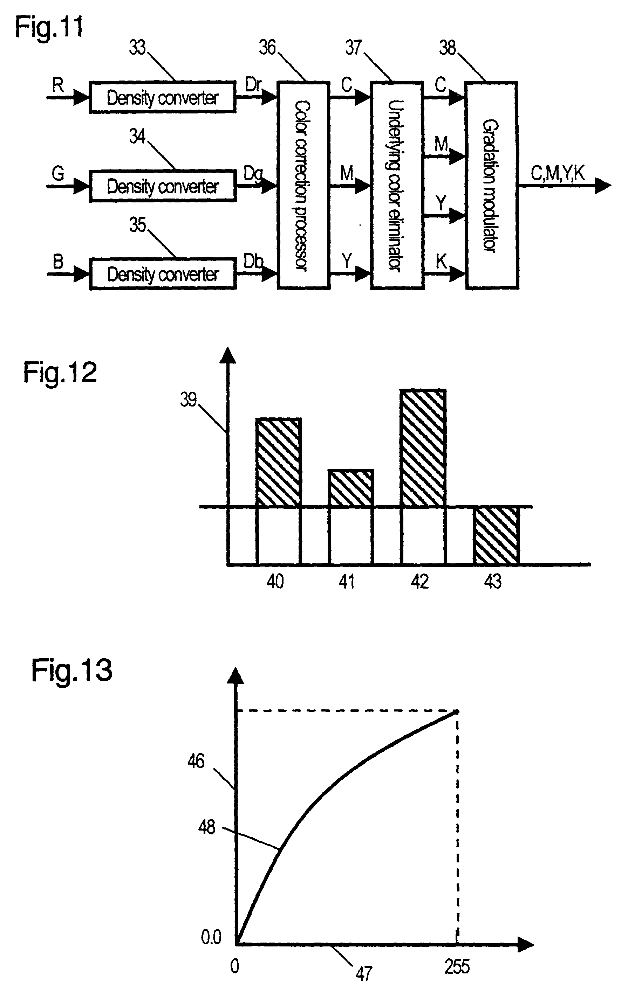

Fig. 11 is a block diagram showing a color correction processor unit of the third exemplary embodiment of this invention. In Fig. 11, density converter circuits 33, 34 and 35 convert R, G and B signals into RGB density signals Dr, Dg and Db. A color correction processor circuit 36 performs a process of converting them into C, M, and Y densities after execution of a printer color correction process. An under color removal circuit 37 generates a K signal, so as to obtain CMYK densities. A gradation modulator circuit 38 modulates gradation.

(A black mixing amount determination step)

Fig. 12 is a conceptual diagram showing concept of an removal process of under color. In Fig. 12, an axis 39 represents density, a bar graph 40 indicates a density of C, a bar graph 41 a density of M, a bar graph 42 a density of Y, and a bar graph 43 a density of K. A certain portion of each density of C, M, and Y that generally equals to several percents (a UCR ratio) of the M density 41 having the lowest density level among the densities C, M and Y, is substituted by K density to generate the K density. Portions 44 with hatching in the individual bar graphs indicate the C, M, Y and K densities after removal of under colors. White portions 45 of the individual bar graphs represent removed portions as the under colors. In this exemplary embodiment, the combination of C, M, Y and K obtained in the first exemplary embodiment and the second exemplary embodiment is used as means of determining the UCR ratio.

Fig. 13 is a relational chart showing a relation of the UCR ratio with respect to the lowest density. An axis 46 represents the UCR ratio, and an axle 47 represents the lowest density. A characteristic curve 48 gives the UCR ratio to the lowest density. Use of the UCR ratio given by the characteristic curve 48 smoothes variation in glossiness, thereby providing a color image of excellent look.

As has been described, the present exemplary embodiment makes possible the correction of glossiness with an adjustment of only black toner, since it comprises:

a) a glossiness obtaining step for obtaining glossiness of mono-color output produced with the coloring materials individually;

b) a glossiness estimation step for estimating glossiness by using the glossiness obtained for each of the coloring materials for the cases where two or more coloring materials are mixed;

c) a first relation obtaining step for obtaining a relation between amount of the coloring material used for the mono-color output and the glossiness;

d) a second relation obtaining step for obtaining a relation between total amount of the coloring materials used for the mixed-color output and the glossiness;

e) a third relation obtaining step for obtaining a relation between mixing ratio of the coloring materials used for the mixed-color output and the glossiness;

f) a coloring material combination determining step for determining combination of the coloring materials with respect to variation of glossiness based on the relations obtained in the first through the third relation obtaining steps; and

g) the black mixing amount determination step for determining a mixing amount of the black toner according to the determined combination.

As described above, the method of color correction of this invention provides an advantageous effect of achieving a color image output of excellent look by taking into account an effect of glossiness of the coloring materials, and reducing a difference in the glossiness of the reproduced image, since it is able to perform color corrections with consideration given on glossiness of the coloring materials.

Moreover, it provides another advantageous effect of readily obtaining a relation of glossiness with respect to the toner, since it is able to obtain glossiness of mixed colors by obtaining glossiness of only the toner of mono-color.

Furthermore, it provides still another advantageous effect of realizing correction of glossiness only by adjusting the black.

**(Fourth Exemplary Embodiment)**

A three-dimensional RGB density space 54, i.e. a cube representing a coverage of an entire color space input from a computer 2, is divided into smaller cubes 56, as shown in Fig. 16. CMYK data corresponding to RGB density values at individual vertexes of the cubes 56 are then saved in a reference table.

In connection with one cube 56, which is comprised of a divided portion of the three-dimensional RGB density space 54 and contains a coordinate point 55 representing input RGB density signals located in the three-dimensional RGB density space 54, CMYK signals to be output corresponding to the input RGB density signals are obtained from values in the CMYK output reference table for the eight vertexes of the cube 56, and weights given by individual distances between the eight vertexes of the cube 56 and the coordinate point 55. Vertexes of individual cubes, as the three-dimensional RGB density space 54 is divided into individual cubes, may be referred to as lattice points in the following text.

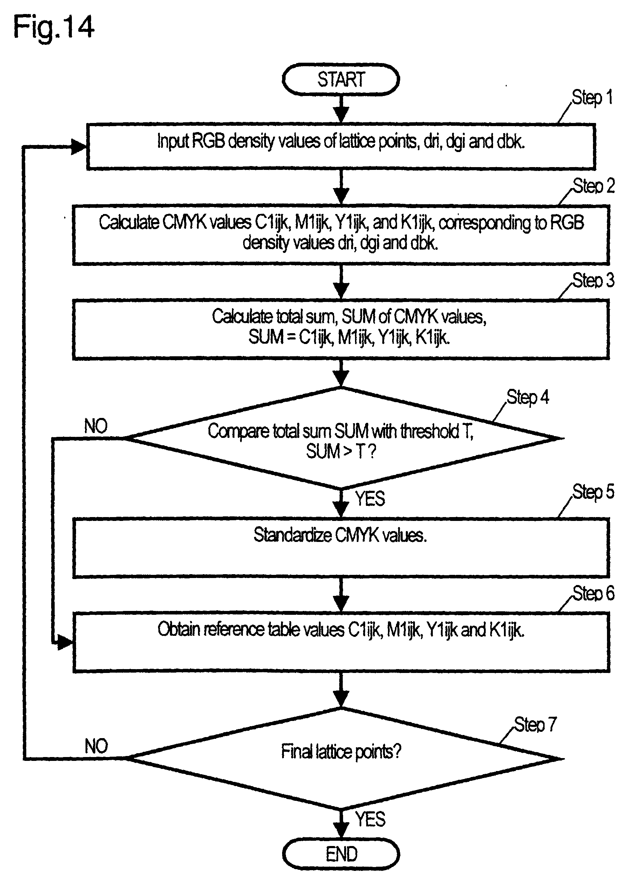

Referring now to Fig. 14, a process of operation according to a method of color correction of this exemplary embodiment will be described next.

(Step 1)

In a flow chart shown in Fig. 14 for preparation of the reference table, RGB density values, i.e. coordinates values of the lattice points, dri, dgj and dbk are obtained first.

(Step 2)

Next, CMYK values C1ijk, M1ijk, Y1ijk and K1ijk, which reproduce colors that most accurately match with colors of the RGB density values dri, dgj and dbk, are obtained.

(Step 3)

Then, a sum total SUM of the CMYK values C1ijk, M1ijk, Y1ijk and K1ijk derived in the step 2 is obtained.

(Step 4)

The sum total SUM obtained in the step 3 is compared with a value of threshold T.

(Step 5)

If the threshold T is smaller than the sum total SUM, a standardization process is performed in a manner that the sum total SUM of the CMYK values becomes equal to the threshold T.

Or, if the threshold T is greater than the sum total SUM, the process is advanced to a step 6 to be described later.

In this step 5, formulae used to standardize the CMYK values are shown below.

$$Cijk = (C1ijk / SUM) \times T$$
$$Mijk = (M1ijk / SUM) \times T$$
$$Yijk = (Y1ijk / SUM) \times T \quad \bigg\} \quad ---------- \ (3)$$
$$Kijk = (K1ijk / SUM) \times T$$

(Step 6)

Next, reference table values are established by taking the CMYK values C1ijk, M1ijk, Y1ijk and K1ijk obtained either in the step 3 if the threshold T is greater than the sum total SUM, or in the step 5 if the threshold T is smaller than the sum total SUM, respectively.

(Step 7)

When the reference table values are obtained, a judgement is made as to whether further calculations are required for other reference table values, or if they are final lattice points.
The process returns to the step 1 if the other reference table values are found in the step 7 as to be calculated, or, the process ends if calculation of the reference table values is completed.
According to the present exemplary embodiment as described, a difference in glossiness of an output image can be reduced between areas of single color only of the K toner and other colors, since total amount of the coloring materials to be output is adjusted, thereby making possible to obtain a color image output of high picture quality.
In the step 5 of Fig. 14, although the standardization is performed without changing a mixing ratio of the C, M, Y and K, the standardization may be made by decreasing amounts of the toners C, M and Y, while maintaining an amount of the toner K unchanged.
Formulae to be used for the standardization in such instance are shown hereinafter.

If K1ijk > T, then

$$Cijk = 0$$
$$Mijk = 0$$
$$Yijk = 0 \quad \bigg\} \quad ----------- \ (4)$$
$$Kijk = T$$

or, if K1ijk < T, then

$$Cijk = (C1ijk / (SUM - K1ijk)) \times (T - K1IJK)$$
$$Mijk = (M1ijk / (SUM - K1ijk)) \times (T - K1IJK)$$
$$Yijk = (Y1ijk / (SUM - K1ijk)) \times (T - K1IJK) \quad \bigg\} \quad ----------- \ (5)$$
$$Kijk = K1IJK$$

Color images of high picture quality can be obtained with the process using these formulae, since it smoothes a variation of glossiness because the reduction in amount of the toners of C, M and Y having large glossiness suppresses a tone of color in a monochromic dark portion.

In addition, glossiness can also be adjusted in these instances by adopting a different value of the threshold T, which is used in the step 4 in Fig. 14, in the RGB density space.

That is, a distance "d" between the RGB density values dri, dgj and dbk input in the step 1 of Fig. 14, and black RGB density values drK, dgK and dbK, in the three-dimensional RGB density space is calculated with the following formula.

$$d = ((dri - drk)^2 + (dgi - dgk)^2 + (dbi - dbk)^2)^{1/2} \tag{6}$$

Subsequently, a threshold T is obtained using the distance "d" obtained from the above formula in conjunction with a function "f" of the distance "d", shown in the following formula.

$$T = f(d) \tag{7}$$

Color image outputs of good picture quality with smooth variation of glossiness can be realized by obtaining the threshold T in the described manner, since the threshold T is defined by the function having smooth variation in total amount of the coloring materials from the black (drK, dgK, dbK).

## Industrial Applicability

As described above, the present invention provides an advantageous effect of realizing a reduction of difference in glossiness of an output image, since a total amount of coloring materials to be output is controlled.

This can give a successful effect of obtaining a color output image of high picture quality.

REFERENCE NUMERALS

| | |
|---|---|
| 1. | Color display |
| 2. | Computer |
| 3. | Color printer |
| 4. | Color patch |
| 5, 6, 11, 12, 13, 25, 26, 28; 29. | Axis |
| 7, 8, 10, 14, 15, 16, 17, 21, 30. | Coordinate point |
| 9, 20. | Isometric line of total amount of toner |
| 18. | Origin of coordinates |
| 19. | Line segment |
| 22. | Light source |
| 23. | Measuring plane |
| 24. | Light receptor |
| 27, 31, 32. | Characteristic curve |
| 33, 34, 35. | Density converter circuit |
| 36. | Color correction processor circuit |
| 37. | Under color eliminator circuit |
| 38. | Gradation modular circuit |

### Claims

1. A method of color correction for an image-outputting device for outputting an image using a combination of a plurality of coloring materials each having different constituent material, said method of color correction for an image-outputting device comprising:

   a) a first glossiness obtaining step for obtaining glossiness of a mono-color output produced individually with each said coloring material;
   b) a second glossiness obtaining step for obtaining glossiness of a mixed-color output produced by combining two or more of said coloring materials;

c) a first relation obtaining step for obtaining a relation between amount of said coloring material used for said mono-color output and the glossiness;

d) a second relation obtaining step for obtaining a relation between a total amount of said coloring materials used for said mixed-color output and the glossiness;

e) a third relation obtaining step for obtaining a relation between a mixing ratio of said coloring materials used for said mixed-color output and the glossiness; and

f) a coloring material combination determining step for determining a combination of said coloring materials with respect to variation of glossiness based on the relations obtained in said first through third relation obtaining steps.

2. A method of color correction for an image-outputting device for outputting an image using a combination of a plurality of coloring materials each having different constituent material, said method of color correction for an image-outputting device comprising:

a) a glossiness obtaining step for obtaining glossiness of a mono-color output produced individually with each said coloring material;

b) a glossiness estimation step for estimating glossiness, for a case where two or more of said coloring materials are mixed, by using the glossiness obtained for each of said coloring materials;

c) a first relation obtaining step for obtaining a relation between amount of said coloring material used for said mono-color output and the glossiness;

d) a second relation obtaining step for obtaining a relation between a total amount of said coloring materials used for said mixed-color output and the glossiness;

e) a third relation obtaining step for obtaining a relation between a mixing ratio of said coloring materials used for said mixed-color output and the glossiness; and

f) a coloring material combination determining step for determining a combination of said coloring materials with respect to variation of glossiness based on the relations obtained in said first through third relation obtaining steps.

3. A method of color correction for an image-outputting device for outputting an image using a combination of four primary printing colors of cyan, magenta, yellow and black, said method of color correction for an image-outputting device comprising:

a) a glossiness obtaining step for obtaining glossiness of a mono-color output produced individually with said coloring materials;

b) a glossiness estimation step for estimating glossiness, for a case where two or more of said coloring materials are mixed, by using the glossiness obtained for each of said coloring materials;

c) a first relation obtaining step for obtaining a relation between amount of said coloring material used for said mono-color output and the glossiness;

d) a second relation obtaining step for obtaining a relation between a total amount of said coloring materials used for said mixed-color output and the glossiness;

e) a third relation obtaining step for obtaining a relation between a mixing ratio of said coloring materials used for said mixed-color output and the glossiness;

f) a coloring material combination determining step for determining a combination of said coloring materials with respect to variation of glossiness based on the relations obtained in said first through third relation obtaining steps; and

g) a black mixing amount determination step for determining a mixing amount of black according to said determined combination.

4. A method of color correction used in outputting a color image on a recording paper by superposing a plurality of coloring materials, said method of color correction being characterized by controlling a total amount of said coloring materials, and comprising the steps of:

obtaining individual amounts of said coloring materials composing the color image;

obtaining the total amount of said coloring materials from the individual amounts of said coloring materials;

adjusting the total amount of said coloring materials into a match with a threshold and adopting the threshold as a reference table value, if the threshold is smaller than the total amount of said coloring materials; and

adopting the total amount of said coloring materials as it is, as a reference table value, if the threshold is greater than the total amount of said coloring materials.

**5.** The method of color correction according to claim 4, wherein the total amount is controlled by adjusting amounts of coloring materials other than a coloring material of black color, in a case where one of said plurality of coloring materials is black.

**6.** The method of color correction according to claim 4 further comprising the steps of:

obtaining a distance between a coordinate point of an input color and another coordinate point of black color in a color space of input color signal;
obtaining a threshold from the obtained distance; and
controlling the total amount of said coloring materials using the threshold.

# Fig.1

# Fig.2

EP 1 089 554 A1

## Fig.3

## Fig.4

15

## Fig.5

(0,5) 203 (3,3) 20

11

(0,0) 19 (10,0)

## Fig.6

(B3,K3) 4

K5
K4
K3
K2
K1
K0

B0 B1 B2 B3 B4 B5 B6 B7 B8 B9 B10

## Fig.7

## Fig.8

## Fig.9

## Fig.10

Fig.11

R → [Density converter] 33 → Dr → [Color correction processor] 36 → C → [Underlying color eliminator] 37 → C → [Gradation modulator] 38 → C,M,Y,K →

G → [Density converter] 34 → Dg →

B → [Density converter] 35 → Db →

Fig.12

Fig.13

# Fig.14

```
                    ┌─────────┐
                    │  START  │
                    └────┬────┘
                         │                              Step 1
    ┌────────────────────▼──────────────────────────────────┐
    │  Input RGB density values of lattice points, dri,     │
    │  dgi and dbk.                                          │
    └────────────────────┬──────────────────────────────────┘
                         │                              Step 2
    ┌────────────────────▼──────────────────────────────────┐
    │  Calculate CMYK values C1ijk, M1ijk, Y1ijk, and       │
    │  K1ijk, corresponding to RGB density values dri,      │
    │  dgi and dbk.                                          │
    └────────────────────┬──────────────────────────────────┘
                         │                              Step 3
    ┌────────────────────▼──────────────────────────────────┐
    │  Calculate total sum, SUM of CMYK values,             │
    │  SUM = C1ijk, M1ijk, Y1ijk, K1ijk.                    │
    └────────────────────┬──────────────────────────────────┘
                         │                              Step 4
             NO     ╱────▼────╲
    ◄─────────────╱ Compare total sum SUM with ╲
    │             ╲ threshold T, SUM > T ?     ╱
    │              ╲─────────┬─────────────────╱
    │                        │ YES                   Step 5
    │    ┌───────────────────▼──────────────────────┐
    │    │  Standardize CMYK values.                │
    │    └───────────────────┬──────────────────────┘
    │                        │                       Step 6
    │    ┌───────────────────▼──────────────────────┐
    └───►│  Obtain reference table values C1ijk,     │
         │  M1ijk, Y1ijk and K1ijk.                  │
         └───────────────────┬──────────────────────┘
                             │                        Step 7
                 NO     ╱────▼────╲
    ◄───────────────────╱ Final lattice points? ╲
    │                   ╲─────────┬─────────────╱
    │                             │ YES
    │                        ┌────▼────┐
    │                        │   END   │
    │                        └─────────┘
```

## Fig.15

## Fig.16

EP 1 089 554 A1

# INTERNATIONAL SEARCH REPORT

International application No.

PCT/JP00/01887

| A. CLASSIFICATION OF SUBJECT MATTER |
|---|
| Int.Cl⁷ H04N1/60, B41J2/525 |

According to International Patent Classification (IPC) or to both national classification and IPC

| B. FIELDS SEARCHED |
|---|
| Minimum documentation searched (classification system followed by classification symbols) |
| Int.Cl⁷ H04N1/46-1/62, B41J2/525 |

Documentation searched other than minimum documentation to the extent that such documents are included in the fields searched

| Jitsuyo Shinan Koho | 1926-1996 | Jitsuyo Shinan Toroku Koho | 1996-2000 |
| Kokai Jitsuyo Shinan Koho | 1971-2000 | Toroku Jitsuyo Shinan Koho | 1994-2000 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP, 9-214789, A (Fuji Xerox Co., Ltd.), 15 August, 1997 (15.08.97) (Family: none) | 1-6 |
| A | JP, 4-204567, A (Canon Inc.), 24 July, 1992 (24.07.92) & US, 5162860, A & EP, 488412, B1 | 1-6 |
| A | JP, 4-369970, A (Canon Inc.), 11 December, 1992 (11.12.92) (Family: none) | 1-6 |
| A | JP, 10-322490, A (Ricoh Company, Ltd.), 04 December, 1998 (04.12.98) (Family: none) | 1-6 |
| A | JP, 10-294879, A (Ricoh Company, Ltd.), 04 November, 1998 (04.11.98) (Family: none) | 4-6 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 May, 2000 (02.05.00) | 16 May, 2000 (16.05.00) |

| Name and mailing address of the ISA/ Japanese Patent Office | Authorized officer |
|---|---|
| Facsimile No. | Telephone No. |

Form PCT/ISA/210 (second sheet) (July 1992)

22